# EUROPÄISCHE PATENTSCHRIFT

(11) **EP 2 316 259 B1**
(45) Veröffentlichungstag und Bekanntmachung des Hinweises auf die Patenterteilung: **03.04.2013**
(21) Anmeldenummer: 10180096.9
(22) Anmeldetag: 27.09.2010
(51) Int. Cl.: A01D 41/127, A01B 69/00, G05D 1/02

(54) **Vorrichtung zum Halten eines die relative Position zu einem Erntebestand berührungslosen Sensors, insbesondere einer Kamera, an einer Erntemaschine**
Device for holding a sensor, in particular a camera, in a contactless position relative to harvested goods on a harvester
Dispositif de fixation d'un capteur sans contact de la position relative par rapport à une récolte, notamment une caméra, sur une moissonneuse

(30) Priorität: 03.11.2009 DE 102009051784
(43) Veröffentlichungstag der Anmeldung: 04.05.2011
(73) Patentinhaber: CLAAS Selbstfahrende Erntemaschinen GmbH, 33428 Harsewinkel (DE)
(72) Erfinder: Arnold, Uwe, 72488, Sigmaringen (DE); Klotz, Manfred, 88605, Bietingen (DE)

(56) Entgegenhaltungen:
- EP-A2- 1 002 455
- DE-A1- 4 339 600
- FR-A1- 2 488 098

## Beschreibung

Die Erfindung betrifft eine Vorrichtung zum Halten eines die relative Position zu einem Erntebestand erfassenden berührungslosen Sensors, insbesondere einer Kamera, an einer Erntemaschine gemäß dem Oberbegriff des Patentanspruchs 1.

Aus der EP 1 862 049 A1 ist bekannt, eine Erntemaschine mit einem berührungslosen Sensor auszustatten, der die Position der Erntemaschine relativ zu einem Erntebestand erfasst. Dazu wird ein akustischer Sensor verwendet, der an der Erntemaschine befestigt ist. In der Praxis werden auch andere berührungslose, beispielsweise optisch arbeitende Sensoren, für derartige Zwecke verwendet.

Ganz allgemein dient eine solche Positionserfassung vorrangig dazu, eine automatische Lenkung der Erntemaschine zu ermöglichen und so den Maschinenführer im Erntebetrieb zu entlasten. Derart selbständig arbeitende Lenkungen werden in der Praxis auch als Autopilot bezeichnet.

Daneben kann eine präzise Positionserfassung zur Optimierung des Ernteprozesses beitragen, indem durch entsprechende Lenkung der Erntemaschine versucht wird, möglichst die volle Arbeitsbreite der Erntemaschine zu nutzen. Angesichts größer werdender und damit schwieriger zu übersehender Erntemaschinen gewinnt dieser Aspekt an Bedeutung.

In technischer Hinsicht wird zur Ermöglichung der Positionserfassung ein berührungsloser Sensor so an der Erntemaschine bzw. an einem der Erntemaschine zugeordneten Vorsatzgerät angebracht, dass mittels des Sensors ein Abtasten des Erntebestands, zumeist dessen Bestandskante, möglich ist. Das vom Sensor empfangene Signal wird dann mittels einer Datenverarbeitungseinheit ausgewertet, um die relative Position der Erntemaschine bezüglich des Erntebestands zu errechnen. Mit bekannter relativer Position zum Erntebestand können dann geeignete Steuerbefehle zur Lenkung der Erntemaschine gegeben werden, wodurch die Erntemaschine automatisch entlang der Kante des Erntebestands geführt wird.

Ein der Positionserfassung dienender Sensor ist abhängig von Art und Beschaffenheit der Erntemaschine und der verwendeten Messmethode in geeigneter Weise an der Maschine anzubringen, um eine sichere Positionserfassung zu ermöglichen. Bei selbstfahrenden Erntemaschinen wie beispielsweise Feldhäckslern oder Mähdreschern erfolgt die Platzierung zumeist im vorderen, dem Erntebestand zugewandten Bereich der Erntemaschine, bevorzugt am Vorsatzgerät der Erntemaschine. Da es sich für die anschließende Signalauswertung anbietet, die Bestandskante des Erntebestands zu erfassen, ist der Sensor zweckmäßigerweise auf der Seite der Erntemaschine angeordnet, die im Erntebetrieb der Bestandskante folgt.

Bei heutzutage bevorzugt zum Einsatz kommenden bildgebenden optischen Sensoren wie Kameras ergibt sich technisch eine besonders günstige Möglichkeit der Signalauswertung, wenn der Sensor etwas außerhalb des seitlichen Rands der Erntemaschine positioniert ist und in einem von der Fahrrichtung leicht nach "innen" abweichenden Winkel, d.h. leicht zur Längsmittelebene der Erntemaschine hin, auf die Bestandskante "blickt". Ein aus dieser Perspektive vom Sensor aufgenommenes Bild kann zuverlässig ausgewertet werden.

Zwar ist so eine genaue Positionserfassung möglich, jedoch besteht der Nachteil, dass der Sensor seitlich hinausragend über den Außenrand der Erntemaschine bzw. deren Vorsatzgerät angeordnet werden muss. In bestimmten Arbeitssituationen der Erntemaschine, beispielsweise beim sogenannten "Durchstechen" durch ein Feld oder wenn aus sonstigen Gründen ein Hinausragen des Sensors unerwünscht ist (beispielsweise beim Straßenbetrieb oder bei seitlichen Hindernissen), muss der Sensor demontiert werden und kann folglich nicht mehr genutzt werden.

Aus der EP 1002455 A2 ist eine Vorrichtung zum Halten einer die relative Position zu einem Erntebestand erfassenden berührungslosein Sensoreinheit an einer Erntemaschine bekannt. Für unterschiedliche Arbeitssituation der Erntemaschine lässt sich die Sensoreinheit entlang eines sich quer zur Fahrtrichtung erstreckenden Haltearms verschieben, so dass verschieden beabstandete Positionen bezüglich der Längsmittelebene der Erntemaschine erreichbar sind. Dabei wird jedoch nicht berücksichtigt, dass die Erfassung des Erntebestands abhängig von der gewählten seitlichen Verschiebung qualitativen schwierig sein kann.

Es ist die Aufgabe der vorliegenden Erfindung, eine Vorrichtung zum Halten eines Positionssensors anzugeben, die eine gegenüber dem Stand der Technik verbesserte Nutzung des Sensors in unterschiedlichen Arbeitssituationen der Erntemaschine ermöglicht, wobei insbesondere aus verschiedenen Positionen des Sensors eine erhöhte Erfassbarkeit des Erntebestands gewährleistet sein soll.

Gemäß Anspruch 1 wird die Aufgabe erfindungsgemäß dadurch gelöst, dass Mittel vorgesehen sind, die den Sensor in Abhängigkeit von dessen Position ausrichten.

Erfindungsgemäß ist dabei zunächst erkannt worden, dass im Erntebetrieb unterschiedliche Arbeitssituationen auftreten, die teils den Betrieb eines Positionssensors einschränken. Wie beschrieben, ist dies unter anderem beim sogenannten "Durchstechen" durch ein Feld der Fall, da hier eine seitlich über die Erntemaschine (bzw. deren Vorsatzgerät) hinausragende Positionierung des Sensors nicht möglich ist.

In erfindungsgemäßer Weise ist hierzu eine Lösung gefunden worden, wonach beim sogenannten "Durchstechen" durch ein Feld oder in sonstigen Arbeitssituationen, die keine seitlich über die Maschine hinausragende Positionierung des Sensors erlauben, sich der Sensor in eine - in Bezug auf die Längsmittelebene der Erntemaschine - anders beabstandete Position bringen lässt. So kann beispielsweise beim Durchstechen durch ein Feld der Sensor in eine weniger beabstandete Position bezüglich der Längsmittelebene der Erntemaschine gebracht werden, so dass dieser nicht mehr seitlich über die Maschine hinausragt.

Auf weiterhin erfindungsgemäße Weise sind an der Vorrichtung zusätzlich zur Positionierbarkeit des Sensors - Mittel vorgesehen, die den Sensor in Abhängigkeit von dessen Position ausrichten_{.} Es ist erkannt worden, dass an eine Haltevorrichtung für einen Positionssensor nicht nur Anforderungen hinsichtlich der Positionierung an der Erntemaschine, sondern auch hinsichtlich der Ausrichtung, d.h. der winkelmäßigen Orientierung bestehen. Grundsätzlich kann die Ausrichtung des Sensors sämtliche Drehbewegungen umfassen, welche auf die Orientierung des Sensors, d.h. dessen Winkellage in Bezug auf die Erntemaschine Einfluss nehmen.

In einer vorteilhaften Weiterbildung der Erfindung ist zum Einnehmen der verschieden beabstandeten Positionen der Sensor mittels einer Parallelogrammführung gegenüber der Erntemaschine gelagert. Die Parallelogrammführung ist vorzugsweise so angeordnet, dass der Sensor in Bezug auf die Fahrtrichtung der Erntemaschine seitlich beweglich ist und sorgt dafür, dass der Sensor in den verschieden beabstandeten Positionen jeweils horizontal gleich ausgerichtet ist. So lassen sich die Sensorsignale einfacher auswerten.

In konstruktiver Hinsicht kann die Parallelogrammführung eine mit der Erntemaschine verbundene Konsole und ein parallel zur Konsole geführtes Tragelement zur Aufnahme des Sensors umfassen, wobei zur Parallelführung zwei je gelenkig mit Konsole und Tragelement verbundene Haltearme dienen. Die Konsole kann als Anbauteil für ein Vorsatzgerät ausgeführt sein, wodurch auch eine nachträgliche Montage möglich ist.

Der Bedienkomfort der Vorrichtung für den Maschinenführer lässt sich erhöhen, indem zum Ansteuern der verschieden beabstandeten Positionen des Sensors ein Antrieb vorgesehen ist. Es kann sich dabei grundsätzlich um jedweden Antrieb handeln, wobei sich angesichts der bei Erntemaschinen bereits vorhandenen Hydrauliksysteme ein hydraulischer Antrieb besonders eignet. Dieser kann beispielsweise einen Hydraulikzylinder umfassen, der zwischen einem der Haltearme der Parallelogrammführung und der Konsole wirkt. Der Maschinenführer kann dann beispielsweise durch Fernbetätigung des Antriebs aus der Fahrerkabine die Sensorposition während des Maschinenbetriebs verändern.

In vorteilhafter Weise erfolgt Ausrichtung des Sensors durch Schwenken um eine im Arbeitseinsatz der Erntemaschine im Wesentlichen vertikale Schwenkachse. Denn durch geeignetes Schwenken um eine vertikale Schwenkachse ist es möglich, den Sensor auch in dessen unterschiedlich beabstandeten Positionen zur Längsmittelebene der Erntemaschine zur Positionserfassung zu nutzen.

Bei Ausführung der Vorrichtung mit einer Parallelogrammführung kann auf konstruktiv vorteilhafte Weise das Tragelement den Sensor mittels einer am Tragelement gelagerten Schwenkachse aufnehmen. Der Sensor ist damit um diese Schwenkachse schwenkbar gegenüber dem Tragelement.

Zur Nutzung des Sensors in verschieden beabstandeten Positionen bezüglich der Längsmittelebene der Erntemaschine kann es günstig sein, dass der Sensor in einer weiter beabstandeten Position mit einem Winkel bezogen auf die Längsmittelebene nach innen ausgerichtet ist, und in einer weniger weit beabstandeten Position mit einem Winkel bezogen auf die Längsmittelebene nach außen ausgerichtet ist.

Grundsätzlich kann die Ausrichtung des Sensors auf unterschiedliche Weise an dessen Positionierung gekoppelt sein. Eine konstruktiv einfache Möglichkeit besteht in einer mechanischen Kopplung der Sensorausrichtung an die Positionierung des Sensors. Vorteilhaft daran ist, dass so keine zusätzliche Sensorik und/oder zusätzlicher Antrieb für die Ausrichtung anfällt, sondern die Ausrichtbewegung mechanisch durch die Positionierbewegung des Sensors ausgelöst wird.

Bei Ausführung der Vorrichtung mit einer Parallelogrammführung ist zur Erzielung einer mechanischen Kopplung zwischen Positionierung und Ausrichtung des Sensors in einer vorteilhaften Weiterbildung an der Schwenkachse ein Stellelement befestigt, das mit einer an einem der Haltearme angeordneten Führungsbahn derartig in Reibkontakt steht, dass diese das Stellelement abhängig vom Winkel zwischen Haltearm und Tragelement auslenkt, um durch die so bewirkte Drehung der Schwenkachse den Sensor auszurichten. Der Verlauf der Führungsbahn bestimmt in diesem Fall, wie der Sensor in Abhängigkeit von dessen Position ausgerichtet wird.

Um ein Material schonendes Zusammenwirken von Stellelement und Führungsbahn zu gewährleisten, kann in weiterhin vorteilhafter Weise am Stellelement ein für rollenden und/oder rutschenden Kontakt mit der Führungsbahn ausgebildetes Reibelement vorgesehen sein.

Zur sicheren Führung des Stellelements an der Führungsbahn kann eine gegenüber dem Tragelement abgestützte Haltefeder derartig auf das Stellelement wirken, dass deren Rückstellkraft einen spielfreien Kontakt zwischen Stellelement und Führungsbahn gewährleistet.

In vorteilhafter Weiterbildung der Vorrichtung umfasst die mechanische Kopplung eine Überlastsicherung zum Schutz der Vorrichtung bei Kollisionen mit Hindernissen im Maschinenbetrieb. Die Überlastsicherung kann eine Sollbruchstelle umfassen, welche vorzugsweise durch einen die Schwenkachse gegenüber dem Stellelement arretierenden Spannstift bereitgestellt ist.

Eine weitere Ausgestaltung der Vorrichtung sieht vor, dass der Sensor mittels eines Auslegers an der Schwenkachse befestigt ist. Es können an dem Ausleger auch weitere mit dem Sensor zusammenwirkende Funktionselemente angeordnet sein. Vorteil einer Anordnung von zusätzlichen Funktionselementen an einem derartigen Ausleger ist, dass diese dann zusammen mit dem Sensor ausgerichtet werden. Ein eigener Antrieb zur Ausrichtung des Funktionselements entfällt daher. Dies ist insbesondere für Beleuchtungseinrichtungen zweckmäßig, die den Erntebestand ausleuchten, um auch bei Dunkelheit den Sensorbetrieb zu ermöglichen.

Ganz allgemein kann die Vorrichtung zum Halten des Sensors je nach Einsatzzweck der Maschine an beliebiger Stelle der Erntemaschine angeordnet sein. Um den Sensor möglichst nahe an der Kante des Erntebestands anzuordnen, ist es vorteilhaft, den Sensor an einem Vorsatzgerät der Erntemaschine anzubringen.

Die Vorrichtung lässt sich grundsätzlich für verschiedene Arten von Erntemaschinen nutzen. Besonders vorteilhaft kann die Vorrichtung jedenfalls bei der Ernte von hoch wachsenden Früchten wie Mais eingesetzt werden.

Die Erfindung wird im Folgenden unter Hinweis auf die beigefügten Figuren anhand zweier schematischer Darstellungen sowie eines Ausführungsbeispiels noch einmal näher erläutert. Hieraus ergeben sich auch weitere Einzelheiten und Vorteile der Erfindung. In den Fig. zeigt:
- Fig. 1: eine schematische Draufsicht auf eine Erntemaschine mit einer erfindungsgemäßen Vorrichtung im normalen Erntebetrieb,
- Fig. 2: eine schematische Draufsicht auf eine Erntemaschine mit einer erfindungsgemäßen Vorrichtung beim Durch- stechbetrieb,
- Fig. 3: eine perspektivische Ansicht eines bevorzugten Ausfüh- rungsbeispiels der erfindungsgemäßen Vorrichtung,
- Fig. 4: eine perspektivische Detailansicht des in Fig. 3 mit IV bezeichneten Bereichs,
- Fig. 5: eine perspektivische Ansicht des bevorzugten Ausfüh- rungsbeispiels der Vorrichtung im angebauten Zustand an eine Erntemaschine, wobei der Sensor in drei ver- schieden beabstandete Positionen gebracht ist.

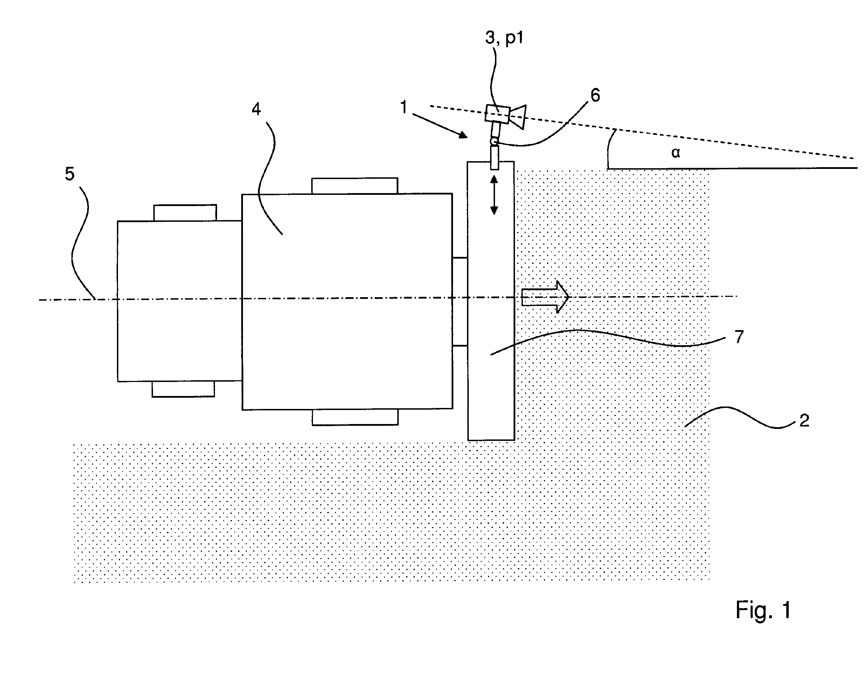

Fig. 1 zeigt in schematischer Draufsicht eine Erntemaschine 4 im normalen Erntebetrieb, d. h. beim Ernten entlang einer Kante eines gepunktet dargestellten Erntebestands 2. Es kann sich bei der Erntemaschine 4 um eine selbstfahrende Erntemaschine, wie beispielsweise einen Feldhäcksler oder Mähdrescher handeln, die Mais erntet. Der Erntemaschine 4 ist ein Vorsatzgerät 7 zugeordnet, das dazu dient, Erntegut vom Erntebestand 2 abzutrennen und Einzugsorganen der Erntemaschine 4 zuzuführen. Die Erntemaschine 4 fährt dabei in Fahrtrichtung (breiter Pfeil) an der Kante eines Erntegutbestands 2 entlang und erntet mittels des Vorsatzgeräts 7 Erntegut entlang der Fahrspur.

Auf der in Fahrtrichtung gesehen linken Seite des Vorsatzgeräts 7 ist - schematisch dargestellt - eine erfindungsgemäße Vorrichtung 1 angeordnet. Diese dient dazu, einen berührungslosen Sensor 3 zu halten. Bei dem Sensor 3 handelt es sich bevorzugt um einen bildgebenden Sensor.

Mittels der Vorrichtung 1 lässt sich der Sensor 3 in verschieden beabstandete Positionen in Bezug auf eine Längsmittelebene 5 der Erntemaschine 4 bringen. Diese seitliche Beweglichkeit des Sensors 3 ist durch den Doppelpfeil angedeutet. Bei der in Fig. 1 dargestellten normalen Erntesituation befindet sich der Sensor 3 in einer Position p1, relativ weit beabstandet von der Längsmittelebene 5 der Erntemaschine 4. Der Sensor 3 ragt dabei seitlich über das Vorsatzgerät 7 hinaus. Zusätzlich ist der Sensor 3 durch Schwenken um eine vertikale Schwenkachse 6 in einem Winkel α nach innen bezogen auf die Längsmittelebene 5 der Erntemaschine 4 ausgerichtet.

Bei der in Fig. 1 gezeigten Positionierung und Ausrichtung erfasst der Sensor 3 die Kante des Erntebestands 2 in einem leicht schrägen Winkel α. Eine Bildauswertung zur relativen Positionsbestimmung der Erntemaschine 4 ist aus dieser Perspektive problemlos möglich. Der Winkel α beträgt vorzugsweise 11°.

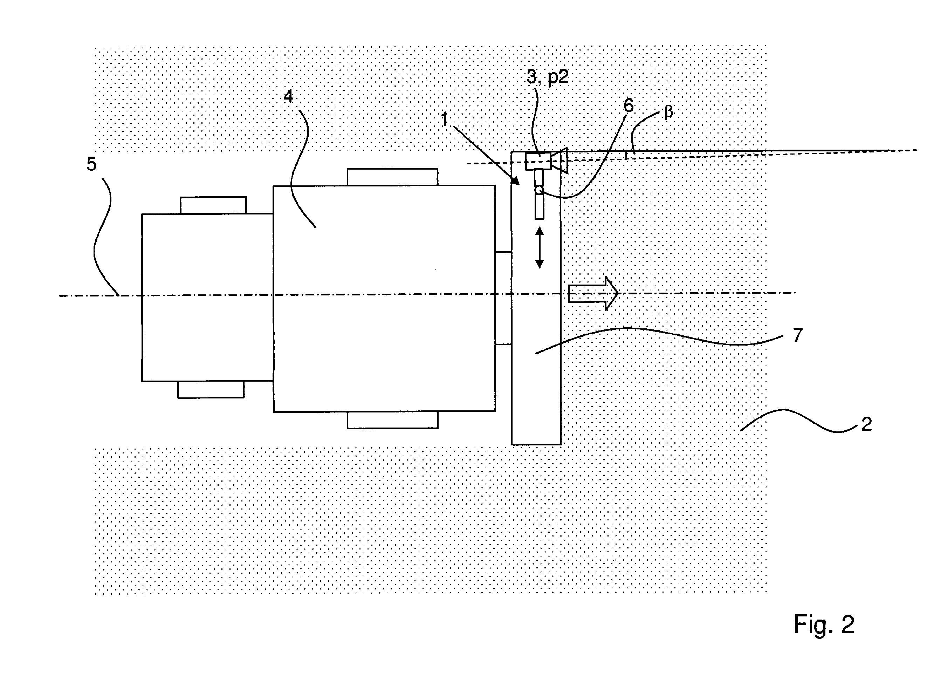

In Fig. 2 befindet sich die Erntemaschine 4 dagegen im sogenannten Durchstechbetrieb. Der vor der Erntemaschine 4 liegende Erntebestand 2 weist noch keine Bestandskante auf. Da seitlich des Vorsatzgeräts 7 kein Platz für einen ausragenden Sensor ist, ist der Sensor 3 erfindungsgemäß in eine Position p2 gebracht worden, die weniger weit beabstandet ist von der Längsmittelebene 5 als die in Fig. 1 gezeigte Position p1.

Der Sensor 3 ist - wiederum durch Schwenken um die vertikale Schwenkachse 6 - nun in einem Winkel β nach außen bezogen auf die Längsmittelebene 5 der Erntemaschine 4 ausgerichtet. Der Sensor 3 kann auch in dieser Arbeitssituation den vor dem linken Rand des Vorsatzgeräts 7 liegenden Erntebestand 2 erfassen. Eine Bildauswertung zur relativen Positionsbestimmung der Erntemaschine 4 ist damit ebenfalls möglich. Mangels einer Bestandskante kann dazu zum Beispiel eine bildliche Auswertung von Pflanzenreihen erfolgen. Der Winkel β beträgt vorzugsweise 4°.

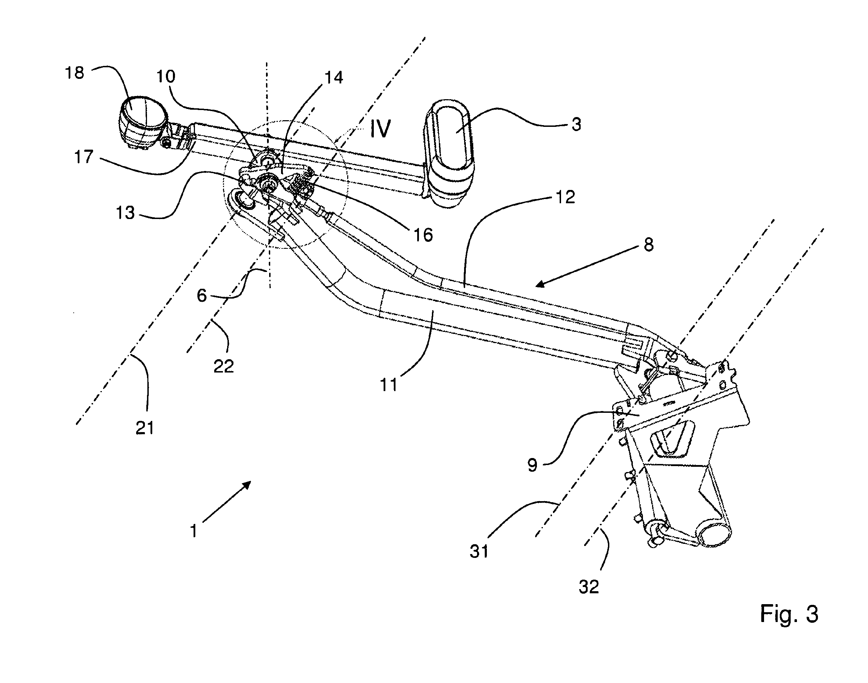

In Fig. 3 ist zur Erläuterung weiterer Details der Erfindung eine perspektivische Ansicht eines bevorzugten Ausführungsbeispiels einer erfindungsgemäßen Vorrichtung 1 - im ausgebauten Zustand - gezeigt. Die Vorrichtung 1 umfasst einen als Kamera ausgeführten berührungslosen Sensor 3, der gemeinsam mit einer Beleuchtungseinrichtung 18 an einem Ausleger 17 montiert ist. Sensor 3 und Beleuchtungseinrichtung 18 werden aufgrund der gemeinsamen Anordnung auf dem Ausleger 17 zusammen ausgerichtet.

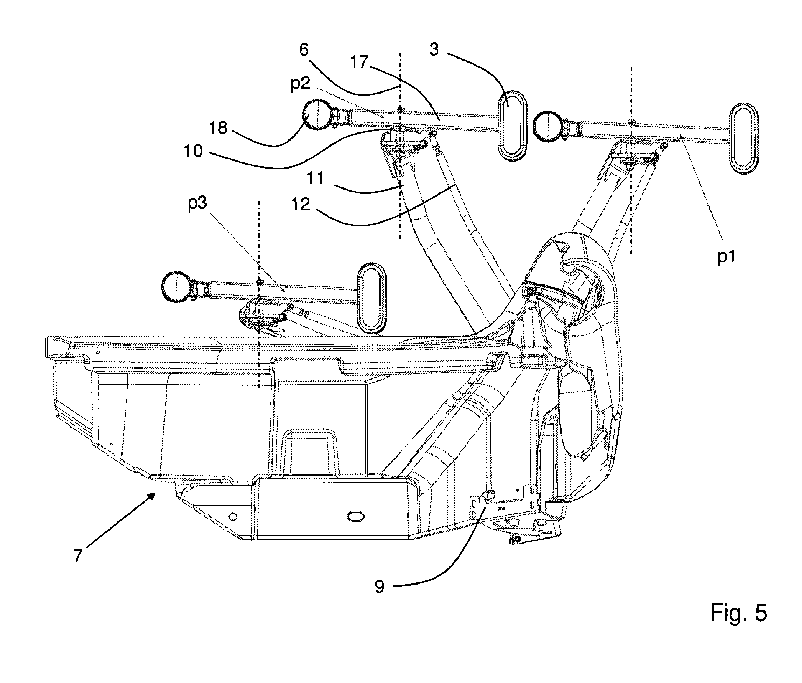

Der Ausleger 17 ist über eine Schwenkachse 6 gegenüber einem Tragelement 10 schwenkbar gelagert. Die Schwenkachse 6 ist im angebauten Zustand der Vorrichtung 1 an eine Erntemaschine in etwa vertikal ausgerichtet (s. Fig. 5).

Das Tragelement 10 ist Teil einer Parallelogrammführung 8, welche weiterhin eine an eine (nicht gezeigte) Erntemaschine montierbare Konsole 9 sowie zwei parallel wirkende Haltearme 11, 12 umfasst. Die Haltearme 11, 12 sind an deren oberen Enden jeweils gelenkig mit dem Tragelement 10 und an deren unteren Enden jeweils gelenkig mit der Konsole 9 verbunden. Die Parallelogrammführung weist damit zwei obere Achsen 21, 22 und zwei untere Achsen 31, 32 auf, die jeweils den Haltearmen 11, 12 zugeordnet sind. Aufgrund der Parallelogrammführung lässt sich das Tragelement 10 gegenüber der Konsole 9 in verschiedene Positionen bringen, welche im angebauten Zustand an eine Erntemaschine eine unterschiedliche Beabstandung zur Längsmittelebene der Erntemaschine aufweisen. Dabei sorgt die Parallelogrammführung für eine horizontal gleichbleibende Ausrichtung des Tragelements 10 in den verschiedenen Positionen, so dass auch der Ausleger 17, an dem Sensor 3 und Beleuchtung 18 angeordnet sind, waagerecht orientiert bleibt.

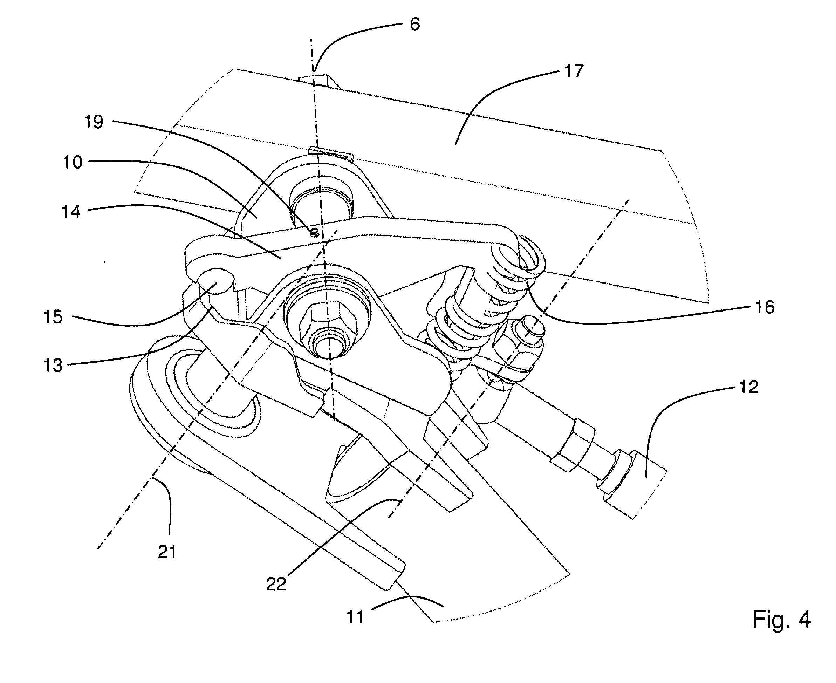

Aus Fig. 4, die eine perspektivische Detailansicht des in Fig. 3 mit IV bezeichneten Bereichs ist, lässt sich erkennen, dass die Ausrichtung des Sensors 3 mechanisch an die Positionierung des Sensors 3 gekoppelt ist. Zu sehen sind die oberen Enden der Haltearme 11, 12 sowie deren oberen Gelenkachsen 21, 22, von denen das Tragelement 10 gehalten wird.

Durch jede Bewegung der Parallelogrammführung, d.h. beim Verändern der Position des Sensors 3, ändert sich der Winkel zwischen Tragelement 10 und den Haltearmen 11, 12. Eine am Haltearm 11 angeordnete Führungsbahn 13 wird dazu genutzt, diese Relativbewegung in eine Schwenkbewegung der Schwenkachse 6 umzuwandeln. Dazu ist an der Schwenkachse 6, mit welcher der Ausleger 17 drehfest verbunden ist, ein Stellelement 14 befestigt. Ein von der Schwenkachse 6 beabstandeter Bereich des Stellelements 14 steht mit der Führungsbahn 13 derartig in Reibkontakt, dass die Führungsbahn 13 das Stellelement 14 abhängig vom Winkel zwischen Haltearm 11 und Tragelement 10 auslenkt. Durch die so bewirkte Drehung der Schwenkachse 6 wird auch der Ausleger 17 und der daran befestigte (in Fig. 4 nicht gezeigte) Sensor 3 ausgerichtet.

Zur Verminderung der Reibung ist am Stellelement 14 ein kugelförmiges Reibelement 15 vorgesehen, welches die Führungsbahn 13 kontaktiert. In vorteilhafter Ausführung rollt dieses an der Führungsbahn 13 ab.

Die Führungsbahn 13 hat im gezeigten Ausführungsbeispiel einen wellenförmigen Verlauf. Im gezeigten Zustand gemäß Fig. 4 liegt das Reibelement 15 des Stellelements 14 in einem Wellental der Führungsbahn 13, so dass die Schwenkachse 6 den Sensor 3 - im eingebauten Zustand der Vorrichtung - nach innen ausrichten würde. Dies entspricht einer Position p3 des Sensors 3 (vgl. Fig. 5).

Im weiteren Verlauf der Führungsbahn 13 folgt ein Wellenberg, der das Stellelement 14 so auslenken würde, dass der Sensor 3 - im eingebauten Zustand der Vorrichtung - nach außen ausgerichtet würde. Dies entspricht einer Position p2 des Sensors 3 (vgl. Fig. 5). Anschließend an den Wellenberg folgt auf der Führungsbahn 13 wiederum ein Wellental, das zu einer ähnlichen Auslenkung der Schwenkachse 6 führen wird wie in Fig. 4. Dies entspricht einer Position p1 des Sensors 3 (vgl. Fig. 5).

Durch ggf. andere Gestaltung der Führungsbahn 13 lassen sich ganz nach Bedarf selbstverständlich auch andere kinematische Zusammenhänge zwischen Schwenk- und Positionierbewegung des Sensors 3 erzeugen.

Eine als Druckfeder ausgeführte Haltefeder 16 stützt sich gegenüber dem Halteelement 10 ab und wirkt derartig auf die dem Reibelement 15 gegenüberliegende Seite des Stellelements 14, dass deren Rückstellkraft einen spielfreien Kontakt zwischen Stellelement 14 (bzw. Reibelement 15) und Führungsbahn 13 gewährleistest. So sind Rückstellung sowie präzise Schwenkbewegung der Schwenkachse 6 sichergestellt.

Zwischen Schwenkachse 6 und Stellelement 14 ist weiterhin eine Überlastsicherung vorgesehen. Dazu wird die drehfeste Verbindung zwischen Schwenkachse 6 und Stellelement 14 mittels eines Spannstifts 19 hergestellt, der für den Fall von Überlastungen als Sollbruchstelle dient.

Schließlich zeigt Fig. 5 eine perspektivische Ansicht der Vorrichtung aus Fig. 3 im angebauten Zustand an ein Vorsatzgerät 7 einer (nicht dargestellten) Erntemaschine von vorn. Der Sensor 3 ist zur Veranschaulichung in drei verschiedenen Positionen p1, p2 und p3 gezeigt, die in drei unterschiedlichen Arbeitssituationen der Erntemaschine eingenommen werden. Nur für die Position p2 ist die Vorrichtung mit Bezugszeichen versehen worden, die selbstverständlich auch für die anderen Positionen p1 und p3 gelten. Zur Erläuterung der Bauteile sei auf die vorherige Beschreibung verwiesen.

In einer ersten Position p1 ("Rand-Position") ist der Sensor 3 am weitesten von der nicht mehr im Bild erfassten, jedoch linksseitig liegenden Längsmittelebene der Erntemaschine beabstandet. Der Sensor 3 ragt über den Seitenrand des Vorsatzgeräts 7 hinaus. In dieser Position p1 ist der Ausleger 17 - und damit die daran befestigte Kamera 3 und die Beleuchtung 18 - um die Schwenkachse 6 leicht nach innen, d.h. hin zur Längsmittelebene ausgerichtet. Eine Erntebestandskante kann daher von außen erfasst werden (vgl. schematische Ansicht aus Fig.1).

In einer zweiten Position p2 ("Tunnel-Position") ist der Sensor 3 für den Durchstechbetrieb durch ein Feld nur noch so weit von der Längsmittelebene der Erntemaschine beabstandet, dass dieser nicht mehr seitlich über den Seitenrand des Vorsatzgeräts 7 hinausragt. Aufgrund der zuvor beschriebenen mechanischen Kopplung zwischen Positionierung und Ausrichtung sind nun Kamera 3 und Beleuchtung 18 um die Schwenkachse 6 leicht nach außen ausgerichtet (vgl. schematische Ansicht aus Fig. 2).

In schließlich einer dritten Position p3 ("Park-Position") ist der Sensor 3 am wenigsten beabstandet von der Längsmittelebene der Erntemaschine. Diese Position p3 kann beispielsweise für den Straßenbetrieb gewählt werden. Durch geeignete Ausbildung der Führungsbahn 13 ist der Ausleger 17 nun um die Schwenkachse 6 so gedreht (vgl. Fig. 4), dass sich die Haltearme 11, 12 und der Ausleger 17 dicht an das Vorsatzgerät 7 anlegen lassen. Das Vorsatzgerät 7 kann daher beispielsweise zum Transport oder zur platzsparenden Lagerung zusammengeklappt werden.

### Bezugszeichenliste

1 Vorrichtung
2 Erntebestand
3 Sensor (Kamera)
4 Erntemaschine (Feldhäcksler)
5 Längsmittelebene
   p1 Position 1
   p2 Position 2
   p3 Position 3
6 Schwenkachse
   α Schwenkwinkel in einer Außenposition
   β Schwenkwinkel in einer Innenposition
7 Vorsatzgerät
8 Parallelogrammführung
9 Konsole
10 Tragelement
11 Haltearm
12 Haltearm
13 Führungsbahn
14 Stellelement
15 Reibelement
16 Haltefeder (Druckfeder)
17 Ausleger
18 Beleuchtung (Arbeitsscheinwerfer)
19 Spannstift
21 obere Achse von Haltearm (11)
22 obere Achse von Haltearm (12)
31 untere Achse von Haltearm (11)
32 untere Achse von Haltearm (12)

## Patentansprüche

1. Vorrichtung zum Halten eines die relative Position zu einem Erntebestand (2) erfassenden berührungslosen Sensors (3), insbesondere einer Kamera, an einer Erntemaschine (4), wobei
der Sensor (3) für unterschiedliche Arbeitssituationen der Erntemaschine (4) in verschieden beabstandete Positionen (p1, p2, p3) in Bezug auf eine Längsmittelebene (5) der Erntemaschine (4) bringbar ist,
**dadurch gekennzeichnet, dass** Mittel vorgesehen sind, die den Sensor (3) in Abhängigkeit von dessen Position (p1, p2, p3) ausrichten.

2. Vorrichtung nach Anspruch 1, **dadurch gekennzeichnet, dass** der Sensor (3) zum Einnehmen der verschieden beabstandeten Positionen (p1, p2, p3) mittels einer Parallelogrammführung (8) gegenüber der Erntemaschine (4) gelagert ist.

3. Vorrichtung nach Anspruch 2, **dadurch gekennzeichnet, dass** die Parallelogrammführung (8) eine mit der Erntemaschine (4) verbundene Konsole (9) und ein parallel zur Konsole (9) geführtes Tragelement (10) zur Aufnahme des Sensors (3) umfasst, wobei zur Parallelführung zwei je gelenkig mit Konsole (9) und Tragelement (10) verbundene Haltearme (11, 12) dienen.

4. Vorrichtung nach einem der Ansprüche 1 bis 3, **dadurch gekennzeichnet, dass** zum Ansteuern der verschieden beabstandeten Positionen (p1, p2, p3) des Sensors (3) ein vorzugsweise hydraulischer Antrieb vorgesehen ist.

5. Vorrichtung nach einem der Ansprüche 1 bis 4, **dadurch gekennzeichnet, dass** die Ausrichtung des Sensors (3) durch Schwenken um eine im Arbeitseinsatz der Erntemaschine (4) im Wesentlichen vertikale Schwenkachse (6) erfolgt.

6. Vorrichtung nach einem der Ansprüche 3 bis 5, **dadurch gekennzeichnet, dass** das Tragelement (10) den Sensor (3) mittels einer am Tragelement (10) schwenkbar gelagerten Schwenkachse (6) aufnimmt.

7. Vorrichtung nach einem der Ansprüche 1 bis 6, **dadurch gekennzeichnet, dass** der Sensor (3) in einer weiter beabstandeten Position (p1) mit einem Winkel (α) bezogen auf die Längsmittelebene (5) nach innen ausgerichtet ist, und in einer weniger weit beabstandeten Position (p2) mit einem Winkel (β) bezogen auf die Längsmittelebene (5) nach außen ausgerichtet ist.

8. Vorrichtung nach einem der Ansprüche 1 bis 7, **dadurch gekennzeichnet, dass** die Ausrichtung des Sensors (3) mechanisch an die Positionierung des Sensors (3) gekoppelt ist.

9. Vorrichtung nach Anspruch 8, **dadurch gekennzeichnet, dass** an der Schwenkachse (6) ein Stellelement (14) befestigt ist, das mit einer an einem der Haltearme (11, 12) angeordneten Führungsbahn (13) derartig in Reibkontakt steht, dass diese (13) das Stellelement (14) abhängig vom Winkel zwischen Haltearm (11, 12) und Tragelement (10) auslenkt, um durch die so bewirkte Drehung der Schwenkachse (6) den Sensor (3) auszurichten.

10. Vorrichtung nach Anspruch 9, **dadurch gekennzeichnet, dass** am Stellelement (14) ein für rollenden und/oder rutschenden Kontakt mit der Führungsbahn (13) ausgebildetes Reibelement (15) vorgesehen ist.

11. Vorrichtung nach Anspruch 9 oder 10, **dadurch gekennzeichnet, dass** eine gegenüber dem Tragelement (10) abgestützte Haltefeder (16) derartig auf das Stellelement (14) wirkt, dass deren Rückstellkraft einen spielfreien Kontakt zwischen Stellelement (14) und Führungsbahn (13) gewährleistet.

12. Vorrichtung nach einem der Ansprüche 8 bis 11, **dadurch gekennzeichnet, dass** die mechanische Kopplung eine Überlastsicherung mit einer Sollbruchstelle umfasst, welche vorzugsweise durch einen die Schwenkachse (6) gegenüber dem Stellelement (14) arretierenden Spannstift (19) bereitgestellt ist.

13. Vorrichtung nach einem der Ansprüche 5 bis 12, **dadurch gekennzeichnet, dass** der Sensor (3) mittels eines Auslegers (17) an der Schwenkachse (6) befestigt ist, wobei an dem Ausleger (17) insbesondere weitere mit dem Sensor zusammenwirkende Funktionselemente angeordnet sind, vorzugsweise eine Beleuchtungseinrichtung (18).

14. Vorrichtung nach einem der Ansprüche 1 bis 13, **dadurch gekennzeichnet, dass** der Sensor (3) an einem Vorsatzgerät (7) der Erntemaschine (4) angebracht ist.

## Claims

1. A device for holding a contact-less sensor (3) for detecting the relative position in relation to a crop stand (2), in particular a camera, on a harvesting machine (4), wherein for different working situations of the harvesting machine (4) the sensor (3) can be brought into differently spaced positions (p1, p2, p3) in relation to a longitudinal central plane (5) of the harvesting machine (4),
**characterised in that** there are provided means which orient the sensor (3) in dependence on its position (p1, p2, p3).

2. A device according to claim 1 **characterised in that** the sensor (3) is mounted by means of a parallelogram guide (8) relative to the harvesting machine (4) for assuming the differently spaced positions (p1, p2, p3).

3. A device according to claim 2 **characterised in that** the parallelogram guide (8) includes a bracket (9) connected to the harvesting machine (4) and a carrier element (10) guided parallel to the bracket (9) for receiving the sensor (3), wherein two holding arms (11, 12) respectively hingedly connected to the bracket (9) and the carrier element (10) serve for parallel guidance.

4. A device according to one of claims 1 to 3 **characterised in that** there is provided a preferably hydraulic drive for implementation of the differently spaced positions (p1, p2, p3) of the sensor (3).

5. A device according to one of claims 1 to 4 **characterised in that** the orientation of the sensor (3) is effected by pivotal movement about a pivot axis (6) which is substantially vertical in working use of the harvesting machine (4).

6. A device according to one of claims 3 to 5 **characterised in that** the carrier element (10) receives the sensor (3) by means of a pivot axis (6) mounted pivotably to the carrier element (10).

7. A device according to one of claims 1 to 6 **characterised in that** the sensor (3) is oriented inwardly in a more widely spaced position (p1) at an angle (α) with respect to the longitudinal central plane (5) and is oriented outwardly in a less widely spaced position (p2) at an angle (β) with respect to the longitudinal central plane (5).

8. A device according to one of claims 1 to 7 **characterised in that** orientation of the sensor (3) is coupled mechanically to positioning of the sensor (3).

9. A device according to claim 8 **characterised in that** fixed to the pivot axis (6) is an adjusting element (14) in frictional contact with a guide path (13) arranged on one of the holding arms (11, 12) in such a way that said guide path (13) deflects the adjusting element (14) in dependence on the angle between the holding arm (11, 12) and the carrier element (10) in order to orient the sensor (3) by the rotation caused thereby of the pivot axis (6).

10. A device according to claim 9 **characterised in that** provided on the adjusting element (14) is a friction element (15) adapted for rolling and/or sliding contact with the guide path (13).

11. A device according to claim 9 or claim 10 **characterised in that** a holding spring (16) supported in relation to the carrier element (10) acts on the adjusting element (14) in such a way that its return force ensures play-free contact between the adjusting element (14) and the guide path (13).

12. A device according to one of claims 8 to 11 **characterised in that** the mechanical coupling includes an overload safety means with a predetermined break location which is preferably afforded by a clamping pin (19) which arrests the pivot axis (6) with respect to the adjusting element (14).

13. A device according to one of claims 5 to 12 **characterised in that** the sensor (3) is fixed to the pivot axis (6) by means of a cantilever arm (17), wherein arranged on the cantilever arm (17) in particular are further functional elements co-operating with the sensor, preferably a lighting device (18).

14. A device according to one of claims 1 to 13 **characterised in that** the sensor (3) is mounted to a front-mounted implement (7) of the harvesting machine (4).

## Revendications

1. Dispositif de fixation d'un capteur (3) sans contact de la position relative par rapport à une récolte (2), notamment une caméra, sur une moissonneuse (4), dans lequel le capteur (3) est susceptible d'être emmené, lors de diverses situations de travail, dans différentes positions espacées (p1, p2, p3) par rapport à un plan central longitudinal (5) de la moissonneuse (4),
**caractérisé en ce que** l'on prévoit des moyens qui alignent le capteur (3) en fonction de sa position (p1, p2, p3).

2. Le dispositif selon la revendication 1, **caractérisé en ce que** le capteur (3) est logé de sorte à occuper les différentes positions espacées (p1, p2, p3) par rapport à la moissonneuse (4) à l'aide d'un guidage en forme de parallélogramme (8).

3. Le dispositif selon la revendication 2, **caractérisé en ce que** le guidage en forme de parallélogramme (8) comprend un support (9) relié à la moissonneuse (4) et un élément porteur (10) conduit parallèlement au support (9) pour la réception du capteur (3), dans lequel pour le guidage parallèle l'on se sert de deux bras de retenue (11, 12), chaque bras étant relié de manière articulé avec le support (9) et l'élément porteur (10).

4. Le dispositif selon une des revendications de 1 à 3, **caractérisé en ce que** pour actionner les différentes positions espacées (p1, p2, p3) du capteur (3) l'on prévoit un dispositif d'entraînement de préférence hydraulique.

5. Le dispositif selon une des revendications de 1 à 4, **caractérisé en ce que** l'alignement du capteur (3) a lieu par pivotement autour d'un axe de pivotement (6) étant essentiellement vertical lors du fonctionnement de la moissonneuse (4).

6. Le dispositif selon une des revendications de 3 à 5, **caractérisé en ce que** l'élément porteur (10) accueille le capteur (3) à l'aide d'un axe de pivotement (6) logé de sorte à pivoter dans l'élément porteur (10).

7. Le dispositif selon une des revendications de 1 à 6, **caractérisé en ce que** le capteur (3) est aligné vers l'intérieur dans une position (p1) plus espacée avec un angle (α) par rapport au plan central longitudinal (5) et est aligné
vers l'extérieur dans une position (p2) moins espacée avec un angle (β) par rapport au plan central longitudinal (5).

8. Le dispositif selon une des revendications de 1 à 7, **caractérisé en ce que** l'alignement du capteur (3) est couplé mécaniquement au positionnement du capteur (3).

9. Le dispositif selon la revendication 8, **caractérisé en ce qu'**un élément de réglage (14) est fixé à l'axe de pivotement (6) de sorte à être tellement en contact de friction avec un rail de guidage (13) logé sur un bras de retenu (11, 12) que celui-ci (13) dévie l'élément de réglage (14) indépendamment de l'angle entre le bras de retenu (11, 12) et l'élément porteur (10) de sorte à aligner, par la rotation ainsi produite, l'axe de rotation (6) sur le capteur (3).

10. Le dispositif selon la revendication 9, **caractérisé en ce que** l'on prévoit un élément de friction (15) sur l'élément de réglage (14), cet élément de friction (15) étant formé pour un contact roulant et/ou glissant avec le rail de guidage (13).

11. Le dispositif selon la revendication 9 ou 10, **caractérisé en ce qu'**un ressort de retenue (16) soutenu par rapport à l'élément porteur (10) agit de telle façon sur l'élément de réglage (14) que sa force de rappel assure un contact exempt de jeu entre l'élément de réglage (14) et le rail de guidage (13).

12. Le dispositif selon une des revendications de 8 à 11, **caractérisé en ce que** le couplage mécanique comprend un organe de sécurité anti-surcharge avec un point de rupture, lequel est de préférence donné par une douille de serrage (19) bloquant l'axe de pivotement (6) par rapport à l'élément de réglage (14).

13. Le dispositif selon une des revendications de 5 à 12, **caractérisé en ce que** le capteur (3) est rattaché, à l'aide d'un bras-support (17), à l'axe de pivotement (6), auquel cas notamment d'autres éléments fonctionnels agissant avec le capteur sont logés sur le bras-support (17), de préférence un dispositif d'éclairage (18).

14. Le dispositif selon une des revendications de 1 à 13, **caractérisé en ce que** le capteur (3) est appliqué sur un appareil additionnel (7) de la moissonneuse (4).
